# EUROPÄISCHE PATENTSCHRIFT

(11) **EP 4 197 332 B1**
(45) Veröffentlichungstag und Bekanntmachung des Hinweises auf die Patenterteilung: **29.04.2026**
(21) Anmeldenummer: 21214901.7
(22) Anmeldetag: 15.12.2021
(51) Int. Cl.: A01N 35/08, A01N 43/40, A01P 1/00

(54) **BIOZIDES MITTEL**
BIOCIDAL COMPOSITION
AGENT BIOCIDE

(43) Veröffentlichungstag der Anmeldung: 21.06.2023
(73) Patentinhaber: Sika Technology AG, 6340 Baar (CH)
(72) Erfinder: Overkamp, Bernd, 48612 Horstmar (DE); Benighaus, Tobias, 48165 Münster (DE)
(74) Vertreter: Sika Patent Attorneys

(56) Entgegenhaltungen:
- WO-A1-00/22930
- WO-A1-2015/082063
- WO-A1-2016/034266
- JP-A- 2004 275 541
- JP-A- 2013 189 404
- JP-A- 2018 158 991
- KR-A- 20090 056 309
- .: "Emissionsarme Bodenbelagsklebstoffe und andere Verlegemittel (Version 9)", DE-UZ 113, 1 January 2019 (2019-01-01), Bonn, Germany, pages 1 - 26, XP093219849, Retrieved from the Internet <URL:https://produktinfo.blauer-engel.de/uploads/criteriafile/de/DE-UZ%20113-201901-de%20Kriterien-V9.pdf>
- PRUMBACH ARNO ET AL: "Anforderungen an die Konservierung von Klebstoffen, Dichtmitteln, Spachtelmassen", VORTRAG ANL�SSLICH DER ONLINE-INFORMATIONS- UND DIALOGVERANSTALTUNG "PERSPEKTIVEN DER SUBSTITUTION VON ISOTHIAZOLINONEN ALS SCHUTZMITTEL (TOPFKONSERVIERER) IN FARBEN, LACKEN UND KLEBSTOFFEN", 25 February 2021 (2021-02-25), pages 1 - 23, XP093219845, Retrieved from the Internet <URL:https://www.umweltbundesamt.de/sites/default/files/medien/479/publikationen/uba_leitfaden_bodenbelagsklebstoffe_und_andere_verlegewerkstoffe.pdf>
- KRAUS JOHANNES: "Herstellung von Leichtzuschlagstoffen aus Kl�rschlamm", SCHRIFTENREIHE DES ISWW BAND 112, 1 January 2003 (2003-01-01), Germany, pages 1 - 322, XP055916911, Retrieved from the Internet <URL:https://core.ac.uk/download/pdf/197594849.pdf> [retrieved on 20220502]
- P.J. COLLIER ET AL: "Chemical reactivity of some isothiazolone biocides", JOURNAL OF APPLIED BACTERIOLOGY, vol. 69, no. 4, 1 October 1990 (1990-10-01), pages 578 - 584, XP055104534, ISSN: 0021-8847, DOI: 10.1111/j.1365-2672.1990.tb01551.x

## Beschreibung

### Technisches Gebiet

Die Erfindung betrifft bauchemische Produkte enthaltend ein biozides Mittel. Des Weiteren betrifft die Erfindung ein Verfahren zur Herstellung und/oder Konservierung eines bauchemischen Produkts. Die erfindungsgemässen bauchemischen Produkte sind Klebstoffe.

### Stand der Technik

Wasserbasierte bauchemische Produkte, wie beispielsweise Farben, Klebstoffe, Dichtstoffe, Grundierungen, Ausgleichsmassen, Spachtelmassen oder Putze, können für Mikroorganismen, wie Bakterien, Hefen und Pilze, einen Nährboden bilden. Ohne spezielle Massnahmen zur Konservierung können diese bereits wenige Tage nach der Herstellung hohe Keimzahlen aufweisen. Um sicher zu stellen, dass diese Produkte den hygienischen Anforderungen gerecht werden und die Haltbarkeit gewährleistet ist, werden den Produkten üblicherweise Biozide hinzugegeben, um den mikrobiellen Befall zu vermindern.

Als Biozide verwendet werden beispielsweise solche auf Isothiazolinonbasis. Konkrete Vertreter sind z.B. Benzisothiazolinon (BIT), Methyl-Isothiazolinon (MIT) oder die Kombination von Chlorisothiazolinon mit Methyl-Isothiazolinon (CIT/MIT).

Die WO 2015/028414 (Lanxess Deutschland GmbH) beschreibt z.B. biozide Mittel enthaltend zumindest ein Isothiazolinon aus der Gruppe bestehend aus 1,2-Benzisothiazolin-3-on (BIT) und 2-Methyl-4-isothiazolin-3-on (MIT) sowie zumindest ein N-Alkyl Guanidiniumsalz. Ebenfalls enthalten sein kann 5-Chlor-2-methyl-4-isothiazolin-3-on (CIT) sowie optional weitere biozide Substanzen.

Nachteilig bei dieser Lösung ist allerdings, dass Biozide auf Isothiazolinonbasis meist allergen sind und Produkte, welche mit solchen Bioziden konserviert werden, je nach Konzentrationen der Biozide mit einer entsprechenden GHS-Kennzeichnung versehen werden müssen (z.B. dem EUH-Satz 208 oder bei höheren Biozid-Konzentrationen mit dem H317-Satz + Ausrufezeichen).

Eine andere Möglichkeit zur Verhinderung der Keimbildung, welche z.B. bei Innenfarben auf Wasserbasis angewandt wird, besteht darin, die Produkte so zu formulieren, dass sie einen hohen pH-Wert im Bereich von 11 bis 11.4 aufweisen. Damit wird eine feindliche Umgebung für alle Arten von Mikroorganismen zu geschaffen.

Dieser Ansatz ist aber ist aber nicht für alle bauchemischen Produkte geeignet. Beispielsweise lassen sich Kleb- und Dichtstoffe, welche Polymere auf der Basis von Acrylestern enthalten (z. B. Butyl-Acrylate, Ethylhexyl-Acrylate), nicht ohne technische Nachteile mit derartig hohen pH-Werten formulieren. Dies weil die Estergruppen in den Polymeren unter den stark basischen Bedingungen hydrolysieren, wodurch die Lagerstabilität drastisch gesenkt wird.

Es besteht daher nach wie vor Bedarf nach verbesserten Lösungen, welche die genannten Nachteile nicht oder in geringerem Masse aufweisen.

### Darstellung der Erfindung

Aufgabe der Erfindung ist daher die Bereitstellung eines bauchemischen Produktes enthaltend ein flexibel einsetzbares biozides Mittel, welches möglichst ungefährlich für Mensch und Umwelt ist und darüber hinaus eine langfristige Konservierung des bauchemischen Produktes ermöglicht.

Es wurde überraschenderweise festgestellt, dass die Aufgabe durch ein bauchemisches Produkt enthaltend ein biozides Mittel gemäss Anspruch 1 gelöst werden kann. Kern der Erfindung ist demnach ein bauchemisches Produkt enthaltend ein biozides Mittel umfassend Bronopol und ein Pyrithionsalz und zusätzlich enthaltend eine Verbindung, welche 5-Chlor-2-methyl-4-isothiazolin-3-on (CIT) zersetzt.

Es hat sich gezeigt, dass das im erfindungsgemässen bauchemischen Produkt enthaltene biozide Mittel ein breites Wirkspektrum gegen Bakterien, Hefen und Pilze aufweist. In den zur Konservierung von bauchemischen Produkten erforderlichen Konzentrationsbereichen werden die beiden Wirkstoffe Bronopol und Pyrithionsalze zudem nicht als allergen eingestuft. Entsprechend lassen sich bauchemische Produkte herstellen, welche für Mensch und Umwelt weitaus unbedenklicher sind und keine der ansonsten üblichen Gefahrenkennzeichnungen benötigen.

Dies ist im Besonderen vorteilhaft für Personen mit Isothiazolinonallergien.

Nichtsdestotrotz ermöglicht das biozide Mittel im erfindungsgemässen bauchemischen Produkt bei moderaten pH-Werten von 6 - 9 eine effektive und langfristige Konservierung von bauchemischen Produkten. Je nach Produkten können Lagerstabilitäten von bis zu 12 Monaten oder mehr erreicht werden.

Ohne an die Theorie gebunden zu sein, wird davon ausgegangen, dass das Bronopol und das Pyrithionsalz funktionell zusammenwirken und so eine hohe Effektivität und ein breites Wirkspektrum gegen unterschiedlichste Mikroorgansimen erhalten wird.

Des Weiteren lässt sich das biozide Mittel mit herkömmlichen (allergenen) Bioziden, wie sie z.B. Bestandteil von kommerziell verfügbaren, wässrigen Polymerdispersionen sind, kombinieren. Dadurch lässt sich der Gesamtgehalt an Bioziden erhöhen, ohne dass der Anteil an allergenen Substanzen erhöht wird bzw. der Gehalt an allergenen Bioziden kann unter den massgebenden Grenzwerten gehalten werden.

Auch sind die bioziden Mittel zur Konservierung von verschiedenen bauchemischen Produkten geeignet und entsprechend flexibel einsetzbar.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Weg zur Ausführung der Erfindung

Ein erster Aspekt der vorliegenden Erfindung betrifft ein bauchemisches Produkt enthaltend ein biozides Mittel umfassend Bronopol und ein Pyrithionsalz und zusätzlich enthaltend eine Verbindung, welche 5-Chlor-2-methyl-4-isothiazolin-3-on (CIT) zersetzt, insbesondere Cystein, wobei das bauchemische Produkt einen Klebstoff, insbesondere einen Bodenbelagsklebstoff, darstellt, enthaltend eine wässrige Polymerdispersion und zusätzlich Füllstoffe, mit einem Anteil an Polymerdispersion von 35 - 55 Gew.-%, und einem Anteil an Füllstoffen, insbesondere Sand und/oder Calciumcarbonat, von 25 - 50 Gew.-%, wobei alle Anteile bezogen sind auf das Gesamtgewicht des Klebstoffs.

Bronopol ist ein bei Raumtemperatur fester Stoff und wird auch als 2-Brom-2-nitro-1,3-propandiol bezeichnet. Pyrithionsalze sind Salze von Pyrithion, einem bei Raumtemperatur festen Stoff mit der Bezeichnung Pyridin-2-thiol-1-oxid. Das Pyrithionsalz ist insbesondere Natrium-Pyrithion und/oder Zink-Pyrithion, besonders bevorzugt ist Natrium-Pyrithion.

Das Gewichtsverhältnis von Bronopol zum Pyrithionsalz liegt vorzugsweise im Bereich von 30:70 - 70:30, im Besonderen 40:60 - 60:40, im Speziellen bei 50:50. Damit wird eine optimale Wirkung gegen eine Vielzahl von unterschiedlichen Mikroorganismen erreicht.

Das biozide Mittel kann weiterhin wenigstens einen Vertreter aus der Gruppe bestehend aus grenzflächenaktiven Stoffen, Benetzungsmittel, Emulgatoren, Dispergiermittel, Stabilisatoren, Haftmittel, Verdicker, Spreitmittel, organische Lösungsmittel, Wasser, feste Trägersubstanzen, Duftstoffe, Farbstoffe und/oder pH-Regulatoren enthalten.

Vorteilhafterweise ist das biozide Mittel im erfindungsgemässen bauchemischen Produkt frei von Bioziden auf Isothiazolinonbasis. Im Speziellen ist das biozide Mittel frei von 1,2-Benzisothiazolin-3-on (BIT), 2-Methyl-4-isothiazolin-3-on (MIT) und/oder 5-Chlor-2-methyl-4-isothiazolin-3-on (CIT). Im Besonderen enthält das erfindungsgemässe biozide Mittel keine dieser drei Substanzen.

Zudem enthält das Biozid zusätzlich eine Verbindung, welche 5-Chlor-2-methyl-4-isothiazolin-3-on (CIT) zersetzt, insbesondere Cystein. Durch die Verwendung einer solchen Verbindung kann allenfalls in einer Formulierungskomponenten des bauchemischen Produkts enthaltenes 5-Chlor-2-methyl-4-isothiazolin-3-on (CIT) teilweise oder vollständig zersetzt werden. So können bauchemische Produkte erhalten werden, welche frei sind von problematischem 5-Chlor-2-methyl-4-isothiazolin-3-on (CIT) oder einen unproblematischen Gehalt aufweisen.

Die Verbindung, welche 5-Chlor-2-methyl-4-isothiazolin-3-on (CIT) zersetzt, insbesondere Cystein, weist bezogen auf den Gehalt an Bronopol und Pyrithionsalz zusammen, insbesondere einen Anteil von 1 - 10 Gew.-%, insbesondere 2 - 5 Gew.-%, auf.

Die Summe der Gewichtsanteile aus dem Bronopol, dem Pyrithionsalz und der zudem vorhandenen Verbindung, welche 5-Chlor-2-methyl-4-isothiazolin-3-on (CIT) zersetzt, beträgt, bezogen auf das Gesamtgewicht des bioziden Mittels, insbesondere 5 - 100 Gew.-%. Im Besonderen beträgt der Anteil wenigstens 25 Gew.-%, vorzugsweise wenigstens 50 Gew.-%, im Speziellen wenigstens 90 Gew.-%.

Das biozide Mittel kann entweder in Form einer Zudosierung der Einzelwirkstoffe zum zu schützenden bauchemischen Produkt erfolgen, wobei je nach den Erfordernissen des zu lösenden Konservierungsproblems eine individuelle Einstellung des Konzentrationsverhältnisses vorgenommen werden kann, oder es kann die Zudosierung eines fertigen bioziden Mittels enthaltend mehrere oder sämtliche der Einzelwirkstoffe erfolgen.

Im Besonderen liegt das biozide Mittel als einkomponentiges Mittel vor. Dabei liegen alle Bestandteile des bioziden Mittels in einer einzigen Komponente und/oder einem einzigen Behälter vor. Dies vereinfacht die Handhabung, da die Konzentrationsverhältnisse der einzelnen Bestandteile fix sind.

In einer besonders vorteilhaften Ausführungsform liegt das biozide Mittel als zweikomponentiges Mittel vor, wobei bevorzugt das Bronopol und das Pyrithionsalz in einer ersten Komponente und die Verbindung, welche 5-Chlor-2-methyl-4-isothiazolin-3-on (CIT) zersetzt, insbesondere Cystein, liegt in der zweiten Komponente vor.

Gemäss einer anderen vorteilhaften Ausführungsform liegt das das biozide Mittel als zwei- oder mehrkomponentiges Mittel vor, wobei bevorzugt das Bronopol in einer ersten Komponente und das Pyrithionsalz in einer zweiten Komponente vorliegt. Zudem liegt die Verbindung, welche 5-Chlor-2-methyl-4-isothiazolin-3-on (CIT) zersetzt, insbesondere Cystein, in einer separaten dritten Komponente vor. Mehrkomponentige Mittel sind besonders flexibel anwendbar und können optimal auf die jeweiligen Erfordernisse angepasst werden.

Beim erfindungsgemässen bauchemischen Produkt handelt es sich um einen Klebstoff. Im Besonderen handelt es sich um einen Bodenbelagsklebstoff, einen Fliesenkleber, einen Montageklebstoff oder einen Holzklebstoff.

Das bauchemische Produkt ist ein wasserbasiertes Produkt bzw. ein Produkt, welches vor der Verarbeitung einen Anteil an Wasser enthält.

Dabei enthält das bauchemische Produkt eine wässrige Polymerdispersion. In bauchemischen Produkten basierend auf Polymerdispersionen kommt die Wirkung des bioziden Mittels im Besonderen Masse zum Tragen.

Bei der wässrigen Polymerdispersion handelt es sich insbesondere um eine Dispersion von Homo- und/oder Copolymeren von Ethylen, Propylen, Butylen, Isopren, Butadien, Acrylsäure, Methacrylsäure, Acrylaten, Methacrylaten, Vinylester, Vinylacetat, und/oder Styrol. Insbesondere geeignete Polymere sind Butadien/Styrol-Copolymere, Acrylsäure/Styrol-Copolymere, Methacrylsäure/Styrol-Copolymere, Ethylen/ Vinylacetat-Copolymere, Vinylacetat/(Meth)acrylsäurealkylester-Copolymere, Styrol/(Meth)acrylsäurealkylester-Copolymere und/oder (Meth)acrylsäurealkylester-Copolymere.

Erfindungsgemäss beträgt der Anteil der wässrigen Polymerdispersion, bezogen auf das Gesamtgewicht des bauchemischen Produkts, 35 - 55 Gew.-%. Dabei beträgt der Massenanteil des Polymers in der Polymerdispersion, bezogen auf das Gewicht der Polymerdispersion, vorzugsweise 25 - 70 Gew.-%, insbesondere 40 - 65 Gew.-%. Zudem enthält das bauchemische Produkt Füllstoffe, insbesondere Sand und/oder Calciumcarbonat, wobei, bezogen auf das Gesamtgewicht des bauchemischen Produkts, der Anteil der Füllstoffe im Bereich von 25 - 50 Gew.-%, liegt.

Füllstoffe können beispielsweise ausgewählt sein aus Sand, Calciumcarbonat, Magnesiumoxid, Zinkoxid, Kreide, Talkum, Russ und/oder Bariumsulfat. Besonders bevorzugt sind Sand und/oder Calciumcarbonat.

Im Besonderen weisen die Füllstoffe eine Partikelgrösse im Bereich < 300 µm, bevorzugt < 200 µm, auf. Dies ist insbesondere der Fall, wenn das bauchemische Produkt ein Bodenbelagsklebstoff ist. Die Partikelgrösse meint den D50-Wert und die Bestimmung der Partikelgrösse erfolgen, insbesondere wie in der Norm ISO 13320:2020 beschrieben.

Das bauchemische Produkt enthält sowohl eine wässrige Polymerdispersion als auch Füllstoffe.

Beim bauchemischen Produkt handelt es sich um:
- Einen Klebstoff, insbesondere einen Bodenbelagsklebstoff, mit einem Anteil an Polymerdispersion 35 - 55 Gew.-%, und einem Anteil an Füllstoffen, insbesondere Sand und/oder Calciumcarbonat, von 25 - 50 Gew.-%; wobei alle Anteile bezogen sind auf das Gesamtgewicht des Klebstoffs; Vorzugsweise sind die Partikelgrössen dabei < 200 µm.

Insbesondere enthält das bauchemische Produkt 0.005 - 0.1 Gew.-%, insbesondere 0.015 - 0.05 Gew.-%, im Speziellen 0.02 - 0.04 Gew.-%, des Bronopols sowie 0.005 - 0.1 Gew.-%, insbesondere 0.015 - 0.05 Gew.-%, im Speziellen 0.02 - 0.04 Gew.-%, des Pyrithionsalzes. Das kann erreicht werden, indem das biozide Mittel entsprechend zudosiert wird.

Das Gewichtsverhältnis von Bronopol zum Pyrithionsalz liegt dabei vorzugsweise im Bereich von 30:70 - 70:30, im Besonderen 40:60 - 60:40, im Speziellen 50:50.

Das Pyrithionsalz ist insbesondere Natrium-Pyrithion und/oder Zink-Pyrithion, besonders bevorzugt Natrium-Pyrithion.

Gemäss einer bevorzugten Ausführungsform ist das bauchemische Produkt frei von Bioziden auf Isothiazolinonbasis. Im Speziellen ist das bauchemische Produkt frei von 1,2-Benzisothiazolin-3-on (BIT), 2-Methyl-4-isothiazolin-3-on (MIT) und/oder 5-Chlor-2-methyl-4-isothiazolin-3-on (CIT). Im Besonderen enthält das bauchemische Produkt keine dieser drei Substanzen.

Im Speziellen enthält das bauchemische Produkt zusätzlich 0.0005 - 0.01 Gew.-%, insbesondere 0.001 - 0.005 Gew.-%, im Speziellen 0.001 - 0.003 Gew.-%, einer Verbindung, welche 5-Chlor-2-methyl-4-isothiazolin-3-on (CIT) zersetzt, insbesondere Cystein, und/oder das Reaktionsprodukt dieser Verbindung und 5-Chlor-2-methyl-4-isothiazolin-3-on (CIT).

Gemäss einer weiteren bevorzugten Ausführungsform enthält das bauchemische Produkt höchstens 0.00015 Gew.-% 1,2-Benzisothiazolin-3-on (BIT) und/oder 2-Methyl-4-isothiazolin-3-on (MIT) und das bauchemische Produkt ist frei von 5-Chlor-2-methyl-4-isothiazolin-3-on (CIT).

Der pH-Wert des bauchemischen Produkts liegt vorzugsweise im Bereich von 6-9.

Das bauchemische Produkt kann gegebenenfalls weitere Bestandteile umfassen, die beispielsweise ausgewählt aus der Gruppe bestehend aus organischen Lösemitteln, Wasser, Trocknungsmitteln, Verdickungsmitteln, Weichmachern, Dispergiermitteln, Benetzungsmittel, Tackifiern, Phenolharzen, Kohlenwasserstoffharzen, Naturharzen und deren Derivate, Kautschuke, Pigmente, Farbstoffe, pH-Regulatoren und/oder Oxidationsschutzmitteln.

Ein weiterer Aspekt der vorliegenden Erfindung betrifft ein Verfahren zur Herstellung und/oder Konservierung eines bauchemischen Produkts, insbesondere eines bauchemischen Produkts wie es vorstehend beschrieben ist, wobei vor, während und/oder nach der Herstellung Bronopol und ein Pyrithionsalz zugegeben werden und zusätzlich umfassend den Schritt der Zugabe einer Verbindung, welche 5-Chlor-2-methyl-4-isothiazolin-3-on (CIT) zersetzt, insbesondere Cystein, wobei die Verbindung in einer Menge zugegeben wird, welche es ermöglicht, sämtliches 5-Chlor-2-methyl-4-isothiazolin-3-on (CIT), welches in einem oder mehreren der Bestandteile des bauchemischen Produkts enthalten ist, zu zersetzen.

In dem Verfahren werden vorzugsweise 0.005 - 0.1 Gew.-%, insbesondere 0.015 - 0.05 Gew.-%, im Speziellen 0.02 - 0.04 Gew.-%, des Bronopols sowie 0.005 - 0.1 Gew.-%, insbesondere 0.015 - 0.05 Gew.-%, im Speziellen 0.02 - 0.04 Gew.-%, des Pyrithionsalzes zugegeben.

Bei der Herstellung und/oder der Konservierung des bauchemischen Produkts werden insbesondere das Bronopol und das Pyrithionsalz mit einer wässrigen Polymerdispersion und optional Füllstoffen vermischt. Bei der wässrigen Polymerdispersion und den Füllstoffen handelt es sich um solche wie sie vorstehend im Zusammenhang mit dem erfindungsgemässen bauchemischen Produkt beschrieben sind. Ebenso werden vorzugsweise die vorstehend genannten Mengenverhältnisse realisiert.

Zudem umfassen die Verfahren den Schritt der Zugabe einer Verbindung, welche 5-Chlor-2-methyl-4-isothiazolin-3-on (CIT) zersetzt, insbesondere Cystein. Die Mengenanteile werden insbesondere so gewählt, wie sie vorstehend im Zusammenhang mit dem bioziden Mittel und dem erfindungsgemässen bauchemischen Produkt beschrieben sind. Damit kann allenfalls in den verwendeten Formulierungskomponenten vorhandenes 5-Chlor-2-methyl-4-isothiazolin-3-on (CIT) zersetzt werden.

Die Verbindung, welche 5-Chlor-2-methyl-4-isothiazolin-3-on (CIT) zersetzt, wird in einer Menge zugegeben, welche es ermöglicht, sämtliches 5-Chlor-2-methyl-4-isothiazolin-3-on (CIT), welches in einem oder mehreren der Formulierungskomponenten des bauchemischen Produkts enthalten ist, zu zersetzen, so dass das hergestellte oder konservierte bauchemische Produkt frei wird von 5-Chlor-2-methyl-4-isothiazolin-3-on (CIT) wird.

Verschiedene Herangehensweisen bei der Herstellung eines bauchemischen Produkts sind im Folgenden beschrieben.

In einem ersten besonders vorteilhaften Verfahren zur Herstellung von bauchemischen Produkten werden ausschliesslich Formulierungskomponenten eingesetzt, welche frei sind von bioziden Mitteln auf Isothiazolinonbasis, insbesondere frei von 1,2-Benzisothiazolin-3-on (BIT), 2-Methyl-4-isothiazolin-3-on (MIT) und/oder 5-Chlor-2-methyl-4-isothiazolin-3-on (CIT), wobei vor, während und nach der Vermischung der Bestandeile das erfindungsgemäss eingesetzte biozide Mittel umfassend Bronopol und ein Pyrithionsalz zugesetzt wird. Dadurch werden konservierte bauchemische Produkte erhalten, welche frei sind von bioziden Mitteln auf Isothiazolinonbasis.

In einem zweiten besonders vorteilhaften Verfahren zur Herstellung von bauchemischen Produkten werden Formulierungskomponenten eingesetzt, welche 5-Chlor-2-methyl-4-isothiazolin-3-on (CIT) enthalten, wobei vor, während und nach der Vermischung der Formulierungskomponenten ein erfindungsgemäss eingesetztes biozides Mittel umfassend Bronopol und ein Pyrithionsalz enthaltend eine Verbindung, welche 5-Chlor-2-methyl-4-isothiazolin-3-on (CIT) zersetzt, zugesetzt wird. Wird die Verbindung, welche 5-Chlor-2-methyl-4-isothiazolin-3-on (CIT) zersetzt, insbesondere Cystein, in einer Menge zugegeben, welche es ermöglicht, sämtliches 5-Chlor-2-methyl-4-isothiazolin-3-on (CIT), welches in einem oder mehreren der Formulierungskomponenten des bauchemischen Produkts enthalten ist, zu zersetzen, so wird ein bauchemisches Produkt erhalten, welches frei ist von 5-Chlor-2-methyl-4-isothiazolin-3-on (CIT).

In diesem zweiten Verfahren lassen sich somit Rohstoffe einsetzten, welche mit problematischen Bioziden geschützt sind, während dem Verfahren aber vollständig zersetzt werden.

In einem dritten besonders vorteilhaften Verfahren zur Herstellung von bauchemischen Produkten werden Formulierungskomponenten eingesetzt, welche nebst 5-Chlor-2-methyl-4-isothiazolin-3-on (CIT) zusätzlich 1,2-Benzisothiazolin-3-on (BIT) und/oder 2-Methyl-4-isothiazolin-3-on (MIT) enthalten, wobei vor, während und nach der Vermischung der Bestandeile ein erfindungsgemäss eingesetztes biozides Mittel umfassend Bronopol und ein Pyrithionsalz enthaltend eine Verbindung, welche 5-Chlor-2-methyl-4-isothiazolin-3-on (CIT) zersetzt, zugesetzt wird. Die Verbindung, welche 5-Chlor-2-methyl-4-isothiazolin-3-on (CIT) zersetzt, wird in einer Menge zugegeben, welche es ermöglicht, sämtliches 5-Chlor-2-methyl-4-isothiazolin-3-on (CIT), welches in einem oder mehreren der Formulierungskomponenten des bauchemischen Produkts enthalten ist, zu zersetzen, so dass ein bauchemisches Produkt erhalten wird, welches frei ist von 5-Chlor-2-methyl-4-isothiazolin-3-on (CIT). Bevorzugt beträgt der Gesamtgehalt an 1,2-Benzisothiazolin-3-on (BIT) und/oder 2-Methyl-4-isothiazolin-3-on (MIT) dabei weniger als 0.00015 Gew.-%, bezogen auf das Gesamtgewicht des bauchemischen Produkts.

In diesem dritten Verfahren lassen sich somit Rohstoffe einsetzten, welche mit mehreren problematischen Bioziden geschützt sind, während dem Verfahren aber teilweise zersetzt werden, so dass der Gehalt an problematischen Bioziden auf ein unproblematisches Mass gesenkt wird.

Das erfindungsgemässe Verfahren umfasst in jedem Fall den Schritt der Zugabe einer Verbindung, welche 5-Chlor-2-methyl-4-isothiazolin-3-on (CIT) zersetzt, insbesondere die Zugabe von Cystein, wobei die Verbindung in einer Menge zugegeben wird, welche es ermöglicht, sämtliches 5-Chlor-2-methyl-4-isothiazolin-3-on (CIT), welches in einem oder mehreren der Bestandteile des bauchemischen Produkts enthalten ist, zu zersetzen.

Das biozide Mittel wird dabei insbesondere zur Verminderung des Befalls mit Pseudomonas aeruginosa, Staphylococcus aureus, Proteus mirabilis, Escherichia coli, Pluralibacter gergoviae, Aspergillus brasiliensis, Penicillium expansum, Trichoderma viride und/oder Candida albicans eingesetzt.

Das bauchemische Produkt ist ein wasserbasiertes Produkt bzw. ein Produkt, welches vor der Verarbeitung einen Anteil an Wasser enthält.

Dabei handelt es sich um einen Klebstoff. Im Besonderen handelt es sich um einen Bodenbelagsklebstoff, einen Fliesenkleber, einen Montageklebstoff oder einen Holzklebstoff.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Tabelle 1 zeigt die Zusammensetzungen von drei bauchemischen Klebstoffformulierungen. Bei den Beispielen V1 und V2 handelt es sich um nicht erfindungsgemässe Vergleichsbeispiele. Beispiel B1 ist ein erfindungsgemässes Beispiel.

Die Klebstoffformulierungen wurden durch Vermischen der Komponenten in einem Mischer hergestellt. Bei allen Formulierungskomponenten handelt es sich um kommerziell erhältliche Produkte.

Anschliessend wurden die Klebstoffformulierungen dreimal unter gleichen Bedingungen mit einer Standardlösung enthaltend eine Mischung aus verschiedenen Mikroorganismen infiziert und der Gehalt an Mikroorganismen nach 6 Tagen bestimmt. Die Standardlösung enthielt eine Mischung aus Pseudomonas aeruginosa, Staphylococcus aureus, Proteus mirabilis, Escherichia coli, Pluralibacter gergoviae, Aspergillus brasiliensis, Penicillium expansum, Trichoderma viride und Candida albicans.

**Tabelle 1**

| **Komponente** | **V1** | **V2** | **B1** |
|---|---|---|---|
| Polymerdispersion¹⁾ | 38 | 38 | 38 |
| Calciumcarbonat²⁾ | 25 | 25 | 12 |
| Calciumcarbonat³⁾ | 12 | 12 | 12 |
| Triethylenglykol-Ester von Kolophonium | 18 | 18 | 18 |
| BIT⁴⁾ | - | 0.03 | - |
| CIT/MIT⁵⁾ | - | 0.0008 | - |
| Cystein | 0.002 | - | 0.002 |
| Bronopol | - | - | 0.03 |
| Natrium-Pyrithion | - | - | 0.03 |
| Wasser | 3.90 | 3.87 | 3.84 |
| Prozesschemikalien⁶⁾ | 3.1 | 3.1 | 3.1 |
| Gehalt an Mikroorgansimen⁷⁾ | > 10⁷ | 0 | 0 |

| | | | |
|---|---|---|---|
| ¹⁾ Vinylacetat/Ethylen-Copolymer in Wasser (60 Gew.-% Feststoffgehalt; konserviert mit 14 ppm CIT/MIT) ²⁾ D50 = 35 µm ³⁾ D50 = 10 µm ⁴⁾ 1,2-Benzisothiazolin-3-on ⁵⁾ Mischung aus 3 Gewichtsteilen 5-Chlor-2-methyl-4-isothiazolin-3-on (CIT) und 1 Gewichtsteil 2-Methyl-4-isothiazolin-3-on (MIT) ⁶⁾ Verdicker, Entschäumer, pH-Regulator ⁷⁾ Mikroorganismen pro Gramm nach 6 Tagen | | | |

Die für die Beispiele verwendete Polymerdispersion war, wie in Tabelle 1 angegeben, herstellerseitig mit 14 ppm CIT/MIT geschützt. Bei Versuch V1 wurde aufgrund der Zugabe von Cystein, das 5-Chlor-2-methyl-4-isothiazolin-3-on (CIT) aber vollständig zersetzt. Die Konzentration des verbleibenden 2-Methyl-4-isothiazolin-3-on (MIT) war zu gering, um eine effektive Konservierung zu erreichen. Entsprechend wurde eine hohe Zahl an Mikroorganismen von > 10⁷ beobachtet.

In Versuch V2 wurde auf die Zugabe von Cystein verzichtet. Stattdessen wurde zusätzlich weiteres Biozid (eine CIT/MIT-Mischung) zugegeben. Dadurch wurde eine gute Konservierung erreicht, was sich dadurch zeigt, dass keine Mikroorganismen nachgewiesen werden konnten. Allerdings wurde mit Versuch V2 eine Klebstoffformulierung erhalten, welche einen relativ hohen Anteil an allergenen Bioziden auf Isothiazolinonbasis enthält.

In Beispiel B1 wurde das in der Polymerdispersion enthaltene 5-Chlor-2-methyl-4-isothiazolin-3-on (CIT) aufgrund der Zugabe von Cystein wie bei Versuch V1 vollständig zersetzt. Aufgrund der Zugabe des erfindungsgemässen bioziden Mittels (Bronopol und Natrium-Pyrithion in gleichen Gewichtsanteilen) wurde aber eine effektive Konservierung erreicht. Auch in diesem Fall konnten wie bei Versuch V2 keine Mikroorganismen nachgewiesen werden. Zudem war der so erhaltene Klebstoff frei von 5-Chlor-2-methyl-4-isothiazolin-3-on (CIT) und der Gehalt an 2-Methyl-4-isothiazolin-3-on (MIT) lag unter 1.5 ppm, was unproblematisch ist.

Die vorstehenden Ausführungsbeispiele sind jedoch lediglich als illustrative Beispiele zu verstehen.

## Patentansprüche

1. Bauchemisches Produkt enthaltend ein biozides Mittel umfassend Bronopol und ein Pyrithionsalz und zusätzlich enthaltend eine Verbindung, welche 5-Chlor-2-methyl-4-isothiazolin-3-on (CIT) zersetzt, insbesondere Cystein,
wobei das bauchemische Produkt einen Klebstoff, insbesondere einen Bodenbelagsklebstoff darstellt, enthaltend eine wässrige Polymerdispersion und zusätzlich Füllstoffe, mit einem Anteil an Polymerdispersion von 35 - 55 Gew.-%, und einem Anteil an Füllstoffen, insbesondere Sand und/oder Calciumcarbonat, von 25 - 50 Gew.-%; wobei alle Anteile bezogen sind auf das Gesamtgewicht des Klebstoffs.

2. Bauchemisches Produkt nach Anspruch 1, wobei der Massenanteil des Polymers in der Polymerdispersion, bezogen auf das Gewicht der Polymerdispersion, 25 - 70 Gew.-%, insbesondere 40 - 65 Gew.-%, beträgt.

3. Bauchemisches Produkt nach einem der Ansprüche 1 oder 2, wobei der Anteil an Bronopol 0.005 - 0.1 Gew.-%, insbesondere 0.015 - 0.05 Gew.-%, im Speziellen 0.02 - 0.04 Gew.-%, beträgt und der Anteil des Pyrithionsalzes 0.005 - 0.1 Gew.-%, insbesondere 0.015 - 0.05 Gew.-%, im Speziellen 0.02 - 0.04 Gew.-%, beträgt.

4. Bauchemisches Produkt nach einem der Ansprüche 1 - 3, enthaltend 0.0005 - 0.01 Gew.-%, insbesondere 0.001 - 0.005 Gew.-%, im Speziellen 0.001 - 0.003 Gew.-%, der Verbindung, welche 5-Chlor-2-methyl-4-isothiazolin-3-on (CIT) zersetzt, insbesondere Cystein, und/oder enthaltend ein Reaktionsprodukt der besagten Verbindung mit 5-Chlor-2-methyl-4-isothiazolin-3-on (CIT).

5. Bauchemisches Produkt nach einem der Ansprüche 1 - 4, wobei der pH-Wert des Produkts im Bereich von 6 - 9 liegt.

6. Verfahren zur Herstellung und/oder Konservierung eines bauchemischen Produkts nach einem der Ansprüche 1 - 5, umfassend den Schritt der Zugabe von Bronopol und einem Pyrithionsalz vor, während und/oder nach der Herstellung des bauchemischen Produkts und zusätzlich umfassend den Schritt der Zugabe einer Verbindung, welche 5-Chlor-2-methyl-4-isothiazolin-3-on (CIT) zersetzt, insbesondere Cystein, wobei die Verbindung in einer Menge zugegeben wird, welche es ermöglicht, sämtliches 5-Chlor-2-methyl-4-isothiazolin-3-on (CIT), welches in einem oder mehreren der Bestandteile des bauchemischen Produkts enthalten ist, zu zersetzen.

7. Verfahren nach Anspruch 6, wobei 0.005 - 0.1 Gew.-%, insbesondere 0.015 - 0.05 Gew.-%, im Speziellen 0.02 - 0.04 Gew.-%, des Bronopols sowie 0.005 - 0.1 Gew.-%, insbesondere 0.015 - 0.05 Gew.-%, im Speziellen 0.02 - 0.04 Gew.-%, des Pyrithionsalzes zugegeben werden.

## Claims

1. Construction-chemical product containing a biocidal agent comprising bronopol and a pyrithione salt and additionally containing a compound that breaks down 5-chloro-2-methyl-4-isothiazolin-3-one (CIT), in particular cysteine,
wherein the construction-chemical product is an adhesive, in particular a floor covering adhesive, containing an aqueous polymer dispersion and in addition fillers, having a proportion of polymer dispersion of 35-55% by weight, and a proportion of fillers, in particular sand and/or calcium carbonate, of 25-50% by weight; all proportions being based on the total weight of the adhesive.

2. Construction-chemical product according to Claim 1, wherein the mass fraction of the polymer in the polymer dispersion, based on the weight of the polymer dispersion, is 25-70% by weight, in particular 40-65% by weight.

3. Construction-chemical product according to either of Claims 1 or 2, wherein the proportion of bronopol is 0.005-0.1% by weight, in particular 0.015-0.05% by weight, especially 0.02-0.04% by weight, and the proportion of the pyrithione salt is 0.005-0.1% by weight, in particular 0.015-0.05% by weight, especially 0.02-0.04% by weight.

4. Construction-chemical product according to any of Claims 1-3, containing 0.0005-0.01% by weight, in particular 0.001-0.005% by weight, especially 0.001-0.003% by weight, of the compound that breaks down 5-chloro-2-methyl-4-isothiazolin-3-one (CIT), in particular cysteine, and/or containing a reaction product of said compound with 5-chloro-2-methyl-4-isothiazolin-3-one (CIT).

5. Construction-chemical product according to any of Claims 1-4, wherein the pH of the product is in the range of 6-9.

6. Method for the production and/or preservation of a construction-chemical product according to any of Claims 1-5, comprising the step of adding bronopol and a pyrithione salt before, during and/or after production of the construction-chemical product and additionally comprising the step of adding a compound that breaks down 5-chloro-2-methyl-4-isothiazolin-3-one (CIT), in particular cysteine, wherein the compound is added in an amount that makes it possible to break down all the 5-chloro-2-methyl-4-isothiazolin-3-one (CIT) present in one or more of the constituents of the construction-chemical product.

7. Method according to Claim 6, wherein 0.005-0.1% by weight, in particular 0.015-0.05% by weight, especially 0.02-0.04% by weight, of the bronopol and 0.005-0.1% by weight, in particular 0.015-0.05% by weight, especially 0.02-0.04% by weight, of the pyrithione salt are added.

## Revendications

1. Produit chimique de construction contenant un agent biocide comprenant du bronopol et un sel de pyrithione et contenant en outre un composé qui décompose la 5-chloro-2-méthyl-4-isothiazolin-3-one (CIT), notamment la cystéine,
le produit chimique de construction étant un adhésif, notamment un adhésif pour revêtements de sol, contenant une dispersion polymère aqueuse et en outre des charges, avec une proportion de dispersion polymère de 35 à 55 % en poids, et une proportion de charges, notamment de sable et/ou de carbonate de calcium, de 25 à 50 % en poids ; les proportions étant toutes rapportées au poids total de l'adhésif.

2. Produit chimique de construction selon la revendication 1, dans lequel la proportion massique du polymère dans la dispersion polymère, rapportée au poids de la dispersion polymère, est de 25 à 70 % en poids, notamment de 40 à 65 % en poids.

3. Produit chimique de construction selon l'une quelconque des revendications 1 ou 2, dans lequel la proportion de bronopol est de 0,005 à 0,1 % en poids, notamment de 0,015 à 0,05 % en poids, en particulier de 0,02 à 0,04 % en poids, et la proportion du sel de pyrithione est de 0,005 à 0,1 % en poids, notamment de 0,015 à 0,05 % en poids, en particulier de 0,02 à 0,04 % en poids.

4. Produit chimique de construction selon l'une quelconque des revendications 1 à 3, contenant de 0,0005 à 0,01 % en poids, notamment de 0,001 à 0,005 % en poids, en particulier de 0,001 à 0,003 % en poids, du composé qui décompose la 5-chloro-2-méthyl-4-isothiazolin-3-one (CIT), notamment la cystéine, et/ou contenant un produit de réaction dudit composé avec la 5-chloro-2-méthyl-4-isothiazolin-3-one (CIT).

5. Produit chimique de construction selon l'une quelconque des revendications 1 à 4, dans lequel la valeur de pH du produit se situe dans la plage de 6 à 9.

6. Procédé de fabrication et/ou de conservation d'un produit chimique de construction selon l'une quelconque des revendications 1 à 5, comprenant l'étape de l'ajout de bronopol et d'un sel de pyrithione avant, pendant et/ou après la fabrication du produit chimique de construction et comprenant en outre l'étape de l'ajout d'un composé qui décompose la 5-chloro-2-méthyl-4-isothiazolin-3-one (CIT), notamment la cystéine, le composé étant ajouté en une quantité permettant de décomposer toute la 5-chloro-2-méthyl-4-isothiazolin-3-one (CIT) qui est contenue dans un ou plusieurs des constituants du produit chimique de construction.

7. Procédé selon la revendication 6, dans lequel sont ajoutés de 0,005 à 0,1 % en poids, notamment de 0,015 à 0,05 % en poids, en particulier de 0,02 à 0,04 % en poids, de bronopol ainsi que de 0,005 à 0,1 % en poids, notamment de 0,015 à 0,05 % en poids, en particulier de 0,02 à 0,04 % en poids, du sel de pyrithione.
